# EUROPEAN PATENT APPLICATION

(11) **EP 4 693 577 A1**
(43) Date of publication of application: **11.02.2026**
(21) Application number: 24800186.9
(22) Date of filing: 22.04.2024
(51) Int. Cl.: H01M 10/0583, H01M 50/457, H01M 50/431, H01M 50/46

(54) **ELECTRODE ASSEMBLY AND METHOD FOR MANUFACTURING SAME**

(30) Priority: 02.05.2023 KR 20230057043
(71) Applicant: LG Energy Solution, Ltd., Seoul 07335 (KR)
(72) Inventor: BAE, Won Sik, Daejeon 34122 (KR); LEE, So Yeong, Daejeon 34122 (KR); SUNG, Dong Wook, Daejeon 34122 (KR); KWON, Su Jee, Daejeon 34122 (KR)
(74) Representative: Hoffmann Eitle
(86) International application number: PCT/KR2024/005394
(87) International publication number: WO 2024/228502

(57) **Abstract**

The present disclosure provides an electrode assembly including a separator including a porous polymer base, a first porous coating layer formed on one surface of the porous polymer base, and a second porous coating layer formed on the other surface of the porous polymer base, the separator being bent in a zigzag shape, a negative electrode disposed between the first porous coating layers, and a positive electrode disposed between the second porous coating layers, wherein the first porous coating layer having greater bonding strength with the negative electrode than bonding strength with the positive electrode is used, to provide the electrode assembly having reduced bending because an electrode-separator bonding strength deviation on both surfaces of the separator is reduced.

## Description

### Technical Field

The present application claims the benefit of Korean Patent Application No. 10-2023-0057043 filed in the Korean Intellectual Property Office on May 2, 2023, the entire contents of which are incorporated herein by reference.

The present disclosure relates to an electrode assembly including a zigzag-shaped separator and a method for manufacturing the same.

### Background Art

An electrochemical device is to convert chemical energy into electrical energy by using an electrochemical reaction. Recently, a lithium secondary battery having a high energy density and voltage and a long cycle lifespan and capable of being used in various fields is widely used. As the demand for electric vehicles and energy storage devices are recently increased, a material and structure for maximizing the capacity and energy density are developed.

A secondary battery may include an electrode assembly including a positive electrode, a negative electrode, and a separator disposed between the positive electrode and the negative electrode. The secondary battery may be manufactured by receiving the electrode assembly in a case along with an electrolyte. The secondary batteries may be classified into a pouch type, a cylindrical type, a prismatic type, a coin type, etc. depending on a shape of the case in which the electrode assembly is received, and may be classified into a jelly-roll type, a stack type, etc. depending on a method of manufacturing an electrode assembly or a shape of the electrode assembly.

An electrode assembly using a zigzag stacking method of alternately disposing a positive electrode and a negative electrode between adjacent curves while bending a separator having a long sheet shape in a zigzag shape has recently been developed. For example, the zigzag-shaped electrode assembly may be manufactured in a way to dispose each electrode between long sheet-shaped separators by tilting or swinging a table in which the electrode assembly is stacked or folding the separator in zigzags by performing a reciprocating motion on a supply roll that transfers the separator, when the separator wound on a cylinder is supplied. The zigzag stacking has an advantage in that productivity is excellent because a process is simple compared to another type.

A separator that is used in zigzag stacking may be formed by coating coating slurry on both surfaces of a porous polymer base. An electrode may be formed by coating active material slurry on both surfaces of an electrode current collector. As the separator is bent in zigzags, a plurality of positive electrode and negative electrodes are alternately disposed. The positive electrodes and the negative electrodes are bonded on opposite surfaces of the separator. In this case, if a difference occurs between bonding strength between the separator and the positive electrodes and bonding strength between the separator and the negative electrodes, that is, if pieces of bonding strength applied to both surfaces of the separator are different from each other, bending may occur in a manufacturing process or a manufactured electrode assembly. For example, when the bonding strength between the separator and the negative electrodes is greater than the bonding strength between the separator and the positive electrodes, bending may occur in the direction in which the negative electrodes have been bonded in the separator. The bending of the electrode assembly may cause detachment between the electrode and the separator or may cause a safety problem due to subsequent low stiffness of an electrochemical device. If heat and pressure that are applied to the electrode assembly are increased in order to prevent the occurrence of the bending of the electrode assembly, there are problems in that the permeability of the separator disposed in the outskirts of the electrode assembly is degraded and electrical resistance is increased due to excessive compression.

### DISCLOSURE

### Technical Problem

An object of the present disclosure is to provide a zigzag-shaped electrode assembly including a separator in which porous coating layers on both surfaces thereof have different structures by considering the type of adjacent electrode and a method of manufacturing the same.

### Technical Solution

An aspect of the present disclosure provides an electrode assembly, including a separator including a porous polymer base, a first porous coating layer formed on one surface of the porous polymer base, and a second porous coating layer formed on the other surface of the porous polymer base, the separator being bent in a zigzag shape, a negative electrode disposed between the first porous coating layers, and a positive electrode disposed between the second porous coating layers. The first porous coating layer has greater bonding strength with the negative electrode than bonding strength with the positive electrode.

The second porous coating layer may have greater bonding strength with the positive electrode than bonding strength with the negative electrode.

The bonding strength between the first porous coating layer and the negative electrode may be 0.8 to 1.2 times bonding strength between the second porous coating layer and the positive electrode.

The first porous coating layer may include first binder particles and inorganic particles. An average diameter of the first binder particles may be greater than or equal to an average diameter of the inorganic particles.

The first porous coating layer may include the first binder particles and the inorganic particles at a weight ratio of 20:80 to 80:20.

The second porous coating layer may include second binder particles and inorganic particles. An average diameter of the inorganic particles may be greater than an average diameter of the second binder particles.

The positive electrode may include a positive electrode active material and positive electrode binder resin. The second binder particles and the positive electrode binder resin may be fluorine-based polymers.

The thickness of the first porous coating layer may be greater than or equal to the thickness of the second porous coating layer.

The length of a long side of the electrode assembly may be 500 to 600 mm.

The thickness of the electrode assembly may be 8 to 20 mm.

Another aspect of the present disclosure provides an electrochemical device including the electrode assembly.

The electrochemical device may be a lithium secondary battery.

### Advantageous Effects

The zigzag-shaped electrode assembly of the present disclosure can provide a structure having reduced bending according to an electrode-separator bonding strength difference and can improve the safety of the electrochemical device including the electrode assembly because a difference between pieces of bonding strength of the electrodes bonded to both surfaces of the separator is small while maintaining an advantage of an excellent productivity.

### Brief Description of Drawings

FIG. 1 is a conceptual diagram illustrating a structure in which a separator and electrodes are bonded in an electrode assembly according to one detailed example of the present disclosure.
FIG. 2 is a conceptual diagram illustrating a process of evaluating a bending degree of a secondary battery.

### Mode for Invention

Hereinafter, each component of the present disclosure is described more specifically so that a person having ordinary knowledge in the art to which the present disclosure pertains can easily practice the present disclosure, but this is merely an example and the scope of right of the present disclosure is not restricted by the following contents.

A term "include" used in this specification is used to list materials, compositions, devices, and methods which are useful in the present disclosure, and is not limited to the listed example.

"About" or "substantially" that is used in this specification is used as the category of a numerical value or degree thereof or a meaning close to the numerical value or degree by taking a unique manufacturing and material tolerance and is used to prevent an infringer from illegally using disclosed contents in which accurate or absolute numerical values provided in order to help understanding of the present disclosure are mentioned.

An "electrochemical device" that is used in this specification may mean a primary battery, a secondary battery, a super capacitor, etc.

One detailed example of the present disclosure provides an electrode assembly, including a separator including a porous polymer base, a first porous coating layer formed on one surface of the porous polymer base, a second porous coating layer formed on the other surface of the porous polymer base, and the separator being bent in a zigzag shape, a negative electrode disposed between the first porous coating layers, and a positive electrode disposed between the second porous coating layers. Bonding strength between the first porous coating layer and the negative electrode may be greater than bonding strength between the first porous coating layer and the positive electrode.

The separator has a structure in which the first porous coating layer and the second porous coating layer are stacked on both surfaces of the porous polymer base, respectively. The first porous coating layer and the second porous coating layer are disposed to face each other with the porous polymer base interposed therebetween. Bending the separator in the zigzag shape may mean that the separator is folded at predetermined intervals. Preferably, all of the intervals may be the same. A plurality of positive electrodes and negative electrodes may be alternately disposed one by one while folding the separator. The negative electrode may be disposed between the first porous coating layers of the separator. The positive electrode may be disposed between the second porous coating layers of the separator.

The porous polymer base is a porous film in which a plurality of pores has been formed, and may prevent a short circuit by electrically insulating the positive electrode and the negative electrode. For example, if an electrochemical device is a lithium secondary battery, the porous polymer base may be a porous ion-conducting barrier capable of transmitting lithium ions while blocking an electrical contact between a positive electrode and a negative electrode. At least a part of the pore may form a three-dimensional network through which the surface and inside of the porous polymer base communicate with each other. A fluid may pass through the porous polymer base through the pore.

A material that is physically and chemically stable with respect to an electrolyte, that is, an organic solvent, may be used as the porous polymer base. For example, the porous polymer base may include resin, such as polyolefin series such as polyethylene, polypropylene, and polybutylene, polyvinyl chloride, polyethylene terephthalate, polycycloolefin, polyethersulfone, polyamide, polyimide, polyimideamide, nylon, polytetrafluoroethylene, and a copolymer or mixture thereof, etc., but the present disclosure is not limited thereto. Preferably, polyolefin-based resin may be used as the porous polymer base. Polyolefin-based resin is suitable for manufacturing an electrochemical device having a higher energy density because polyolefin-based resin can be processed at a relatively thin thickness and slurry for coating can be easily applied to polyolefin-based resin.

The porous polymer base may have a single layer or multi-layer structure. The porous polymer base includes two or more polymer resin layers having different melting points (Tm), and may provide a shutdown function upon high-temperature runaway of a battery. For example, the porous polymer base may include a polypropylene layer having a relatively high melting point and a polyethylene layer having a relatively low melting point. Preferably, the porous polymer base may be a three-layer structure in which polypropylene, polyethylene, and polypropylene are sequentially stacked. The polyethylene layer can prevent the thermal runaway of a battery by shutting down the pore as a temperature of the battery rises to a predetermined temperature or higher.

The thickness of the porous polymer base may be 1 *µ*m or more and 100 *µ*m or less. Specifically, the thickness of the porous polymer base may be 10 *µ*m or more and 90 *µ*m or less, 20 *µ*m or more and 80 *µ*m or less, 30 *µ*m or more and 70 *µ*m or less, or 40 *µ*m or more and 60 *µ*m or less. Preferably, the thickness of the polymer base may be 1 *µ*m or more and 30 *µ*m or less. More preferably, the thickness of the polymer base may be 5 *µ*m or more and 15 *µ*m or less, or 7 *µ*m or more and 13 *µ*m or less. By adjusting the thickness of the porous polymer base in the aforementioned range, the amount of an active material included in an electrochemical device may be increased by minimizing the volume of the electrochemical device while electrically insulating a positive electrode and a negative electrode.

The porous polymer base may include a pore having an average diameter of 0.01 *µ*m or more and 1 *µ*m or less. Specifically, the size of the pore included in the porous polymer base may be 0.01 *µ*m or more and 0.09 *µ*m or less, 0.02 *µ*m or more and 0.08 *µ*m or less, 0.03 *µ*m or more and 0.07 *µ*m or less, or 0.04 *µ*m or more and 0.06 *µ*m or less. Preferably, the size of the pore may be 0.02 *µ*m or more and 0.06 *µ*m or less. By adjusting the pore size of the porous polymer base in the aforementioned range, the permeability and ions conductivity of the entire separator that is manufactured can be adjusted.

The porous polymer base may have a permeability of 10 s/100 cc or more and 100 s/100 cc or less. Specifically, the permeability of the porous polymer base may be 10 s/100 cc or more and 90 s/100 cc or less, 20 s/100 cc or more and 80 s/100 cc or less, 30 s/100 cc or more and 70 s/100 cc or less, or 40 s/100 cc or more and 60 s/100 cc or less. Preferably, the permeability of the porous polymer base may be 50 s/100 cc or more and 70 s/100 cc or less. When the permeability of the porous polymer base has the aforementioned range, the permeability of a separator that is manufactured may be provided to have a suitable range in which the output and cycle characteristics of an electrochemical device are secured.

The permeability (s/100 cc) means the time (second) that is taken for the air of 100 cc to pass through a porous polymer base or a separator having a predetermined area under constant pressure. The permeability may be measured by using a Gurley densometer according to ASTM D 726-58, ASTM D726-94, or JIS-P8117. For example, the time that is taken for the air of 100 cc to pass through a 1-square inch (or 6.54 cm²) sample under pressure of 0.304 kPa of the air or pressure of 1.215 kN/m² of water may be measured by using 4110N equipment of Gurley Corporation. For example, the time that is taken for the air of 100 cc to pass through a 1-square inch sample under constant pressure water 4.8 inch at room temperature may be measured by using EG01-55-1MR equipment of Asahi Seico Co., Ltd.

The porous polymer base may have a porosity of 10 vol% or more and 60 vol% or less. Specifically, the porosity of the porous polymer base may be 15 vol% or more and 55 vol% or less, 20 vol% or more and 50 vol% or less, 25 vol% or more and 45 vol% or less, or 30 vol% or more and 40 vol% or less. Preferably, the porosity of the porous polymer base may be 30 vol% or more and 50 vol% or less. When the porosity of the porous polymer base has the aforementioned range, ions conductivity of a manufactured separator may be provided to have a suitable range in which the output and cycle characteristics of an electrochemical device are secured.

The porosity means the volume ratio of a pore for the entire volume of a porous polymer base. The porosity may be measured by using a method that is known in the art. For example, the porosity may be measured by a Brunauer Emmett Teller (BET) measuring method using the adsorption of a nitrogen gas, a capillary flow porometer, or a water or mercury penetration method.

The porous coating layer may be meant to include a first porous coating layer and a second porous coating layer. The first porous coating layer and the second porous coating layer are each formed on one surface of each porous polymer base, and may each include a polymer binder and inorganic particles. The polymer binder may settle the inorganic particles, may bond a porous coating layer and a porous polymer base, and may achieve bonding with an electrode by assigning bonding strength to a separator. The polymer binder may be binder particles having a spherical shape or an elliptic shape. The first porous coating layer may include first binder particles and inorganic particles. The second porous coating layer may include second binder particles and inorganic particles. The first binder particles and the second binder particles that are included in the first porous coating layer and the second porous coating layer, respectively, may be different from each other. The inorganic particles may be the same or different from each other.

Specifically, the first binder particles may include an acrylic polymer. The acrylic polymer may include, as a repetition unit, one or more monomers selected from a group consisting of (meth)acrylic acid, (meth)acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, 2-hydroxyethyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate, hydroxyethyl methacrylate, (meth)acrylonitrile butyl (meth)acrylate, 2-ethylhexyl(meth)acrylate, ethyl(meth)acrylate, methyl(meth)acrylate, n-propyl(meth)acrylate, isopropyl(meth)acrylate, t-butyl(meth)acrylate, pentyl(meth)acrylate, n-oxyl (meth)acrylate, isooctyl(meth)acrylate, isonyl(meth)acrylate, lauryl(meth)acrylate, tetra-decyl (meth)acrylate, and pentafluorophenyl acrylate.

For example, the acrylic polymer may include one or more selected from a group consisting of polyacrylic acid, methyl acrylate, ethyl acrylate, isopropyl acrylate, n-butyl acrylate, isobutyl acrylate, ethylhexyl acrylate, methyl methacrylate, styrenebutadiene rubber, nitril-butadiene rubber, acrylonitrile-butadiene rubber, and acrylonitrile-butadiene-styrene rubber.

An average diameter D50 of the first binder particles may be greater than or equal to an average diameter of inorganic particles to be described later. In this case, the inorganic particles mean inorganic particles that are included in the first porous coating layer along with the first binder particles. The average diameter D50 of the inorganic particles of the first porous coating layer may be 300 nm or more and 500 nm or less. The average diameter D50 of the first binder particles may be 500 nm or more and 1000 nm or less. Specifically, the average diameter of the first binder particles may be 550 nm or more and 950 nm or less, 600 nm or more and 900 nm or less, 650 nm or more and 850 nm or less, or 700 nm or more and 800 nm or less. Preferably, the average diameter of the first binder particles may be 500 nm or more and 700 nm or less. The first binder particles, that is, an acrylic polymer, may have greater bonding strength with a negative electrode than bonding strength of the second binder particles with a positive electrode. In this detailed example, by adjusting the average diameter of the first binder particles to be the average diameter of the inorganic particles or more in the aforementioned range, the forming of the bending of an electrode assembly can be prevented by reducing an electrode-separator bonding strength deviation with each electrode on both surfaces of the separator.

Specifically, the second binder particles may be a fluorine-based polymer. Preferably, the fluorine-based polymer may be a polyvinylidene fluoride-based polymer. For example, the fluorine-based polymer binder may be one or more selected from a group consisting of polyvinylidene fluoride, polyhexafluoropropylene, polytetrafluoroethylene, polyvinylidene fluoride-hexafluoropropylene (PVDF-HFP), polyvinylidene fluoride-trichloroethylene (PVDF-TCE), and polyvinylidene fluoride-chlorotrifluoroethylene (PVDF-CTFE), and may be specifically a copolymer including polyvinylidene fluoride.

The average diameter D50 of the second binder particles may be smaller than the average diameter of inorganic particles to be described later. In this case, the inorganic particles mean inorganic particles that are included in the second porous coating layer along with the second binder particles. The average diameter D50 of the inorganic particles of the second porous coating layer may be more than 300 nm and 500 nm or less. The average diameter D50 of the second binder particles may be 100 nm or more and 300 nm or less. Preferably, the average diameter of the second binder particles may be 200 nm or more and 300 nm or less. The second binder particles, that is, a fluorine-based polymer, may have smaller bonding strength with a positive electrode than bonding strength between the first binder particles and a negative electrode. In this detailed example, by adjusting the average diameter of the second binder particles less than the average diameter of the inorganic particles in the aforementioned range, electrode-separator bonding strength with a positive electrode can be improved by increasing a surface area in which the second binder particles may come into contact with an electrode. Accordingly, the forming of the bending of an electrode assembly can be prevented by reducing an electrode-separator bonding strength deviation with each electrode on both surfaces of the separator.

Inorganic particles that are electrochemically stable may be used as the inorganic particles. The inorganic particles are not specially limited if an oxidation and/or reduction reaction do not occur in inorganic particles in an operating voltage range (e.g., 0 to 5 V on the basis of Li/Li⁺) of an electrochemical device. In particular, if inorganic particles having a high dielectric constant are used as the inorganic particles, the ion conductivity of a liquid electrolyte can be improved by contributing to an increase of a degree of dissociation of electrolyte salts within the liquid electrolyte, for example, lithium salts. Due to the reasons, it is preferred that the inorganic particles include inorganic particles having a dielectric constant of 5 or higher, preferably, a high dielectric constant of 10 or more. Unconstrained examples of the inorganic particles having a dielectric constant of 5 or higher include BaTiO₃, Pb(Zr,Ti)O₃(PZT), b₁₋ₓLaₓZr_{1-y}Ti_{y}O₃(PLZT, 0<x<1, 0<y<1), Pb(Mg_{1/3}Nb_{2/3})O₃-PbTiO₃(PMN-PT), hafnia(HfO₂), SrTiO₃, SnO₂, CeO₂, MgO, NiO, CaO, ZnO, ZrO₂, SiO₂, Y₂O₃, Al₂O₃, Al(OH)₃, SiC, AlOOH, TiO₂, or a mixture of them.

Furthermore, inorganic particles having a lithium ion transfer ability, that is, inorganic particles containing lithium elements, but having a function for transfering lithium ions without storing lithium may be used as the inorganic particles. Unconstrained examples of the inorganic particles having the lithium ion transfer ability include lithium phosphate (Li₃PO₄), lithium titanium phosphate (LiₓTi_{y}(PO₄)₃, 0<x <2, 0<y<3), lithium aluminum titanium phosphate (LiₓAl_{y}Ti_{z}(PO₄)₃, 0<x<2, 0<y<1, 0<z<3), (LiAlTiP)ₓO_{y}-series glass (0<x<4, 0<y<13), such as 14Li₂O-9Al₂O₃-38TiO₂-39P₂O₅, lithium lanthanum titanate (LiₓLa_{y}TiO₃, 0<x <2, 0<y<3), lithium germanium thio phosphate (LiₓGe_{y}P_{z}S_{w}, 0<x<4, 0<y<1, 0<z<1, 0<w<5), such as Li_{3.25}Ge_{0.25}P_{0.75}S₄, lithium nitride (LiₓN_{y}, 0<x <4, 0<y<2), such as Li₃N, SiS₂-series glass (LiₓSi_{y}S_{z}, 0<x<3, 0 <y<2, 0<z<4), such as Li₃PO₄-Li₂S-SiS₂, P₂S₅-series glass (LiₓP_{y}S_{z}, 0<x<3, 0<y<3, 0<z<7), such as LiI-Li₂S-P₂S₅, or a mixture of them.

Furthermore, inorganic particles that assign a flame retardant characteristic to a separator or that can prevent a temperature within an electrochemical device from suddenly rising as inorganic particles having flame resistance may be used as the inorganic particles. Unconstrained examples of the inorganic particles having flame resistance include Sb₂O₃, Sb₂O₄, Sb2O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, SiC, TiO₂, H₃BO₃, HBO₂ and a mixture of them.

The first porous coating layer and the second porous coating layer may include inorganic particles having the same or different types or an average diameter. For example, the first porous coating layer and the second porous coating layer may include inorganic particles that are the same, but have different average diameters. Preferably, the first porous coating layer and the second porous coating layer may include inorganic particles that are the same, but have the average diameter D50 of 300 nm or more and 500 nm or less. By adjusting the average diameter of the inorganic particles in the aforementioned range, the occurrence of the bending of an electrode assembly can be prevented by reducing the deviation between bonding strength between the first porous coating layer and a negative electrode and a bonding strength between the second porous coating layer and a positive electrode.

The porous coating layer may include a polymer binder and inorganic particles having a weight ratio of 20:80 to 80:20. Specifically, the porous coating layer may include binder particles and inorganic particles having a weight ratio of 25:75 to 75:25, 30:70 to 70:30, 35:65 to 65:35, 40:60 to 60:40, or 45:55 to 55:45. By adjusting a content of each of the polymer binder and the inorganic particles in the aforementioned range, an electrode short circuit attributable to the contraction of a separator can be prevented and bonding strength of the separator with an electrode can be secured because the thermal contraction of a porous polymer base is prevented. A content ratio of the binder particles and the inorganic particles in the first porous coating layer and the second porous coating layer may be the same or different from each other. For example, a content of the binder particles of the first porous coating layer may be greater than that of the second porous coating layer.

The porous coating layer may be formed by coating coating slurry, including binder particles, inorganic particles, and a dispersion medium, on one surface of the porous polymer base. The separator may be manufactured by coating first coating slurry for forming the first porous coating layer on one surface of the porous polymer base, second coating slurry for forming the second porous coating layer on the other surface of the porous polymer base, and removing the dispersion medium by drying the first coating slurry and the second coating slurry. Preferably, the first coating slurry and the second coating slurry may be applied and dried simultaneously. The porous coating layer may have a porous structure having an interstitial volume in which the inorganic particles are connected by binder particles. The porous coating layer can prevent the thermal contraction of the porous polymer base because the porous coating layer is bonded to the porous polymer base while transmitting lithium ions.

The coating slurry may disperse the binder particles and the inorganic particles because the coating slurry includes the dispersion medium. Coating slurry in which inorganic particles have been uniformly distributed by adjusting the type or content of the dispersion medium may be used as the coating slurry. It may be water, for example.

The coating slurry further includes additives, such as a dispersant, a surfactant, a defoaming agent, a flame retardant, and a humectant, and can improve dispersibility and flame resistance and improve the uniformity of a porous coating layer that is formed. For example, the dispersant may include one or more selected from a group consisting of oil-soluble polyamine, an oil-soluble amine compound, fatty acids, fatty alcohols, sorbitan fatty acid ester, tannic acid, and pyrogallic acid. The stability of the coating slurry can be improved and the uniformity of the porous coating layer that is formed by the coating slurry can be secured by using the dispersant having the type.

The additives of 0 wt% or more and 5 wt% or less may be included on the basis of a total weight of the coating slurry. Specifically, the additives may have a content of 0.01 wt% or more and 4 wt% or less, 0.1 wt% or more and 3 wt% or less, or 1 wt% or more and 2 wt% or less. Preferably, the content of the additives may be 3 wt% or more and 5 wt% or less. By adjusting the content of the additives in the aforementioned range, a uniform distribution and stability of the inorganic particles included in the coating slurry can be achieved.

The dispersion medium included in the coating slurry may be removed by dry or heating after the porous coating layer is formed. For example, the porous coating layer may include the dispersion medium of 5 ppm or less. Preferably, the porous coating layer may be formed of binder particles and inorganic particles. In a process of the dispersion medium being removed, a plurality of pores may be formed in a surface and inside of the porous coating layer. The pore may include an interstitial volume formed between the inorganic particles, and may have a structure that forms a three-dimensional network through which a fluid can pass.

The thickness of the porous coating layer may be 1 *µ*m or more and 15 *µ*m or less. Specifically, the thickness of the porous coating layer may be 2 *µ*m or more and 14 *µ*m or less, 3 *µ*m or more and 13 *µ*m or less, 4 *µ*m or more and 12 *µ*m or less, 5 *µ*m or more and 11 *µ*m or less, 6 *µ*m or more and 10 *µ*m or less, or 7 *µ*m or more and 9 *µ*m or less. By adjusting the thickness of the porous coating layer in the aforementioned range, the contraction of the porous polymer base can be minimized and stable bonding with the porous polymer base can be implemented. Preferably, the thickness of the first porous coating layer may be greater than the thickness of the second porous coating layer.

The separator for an electrochemical device may have the permeability of 50 s/100 cc or more and 300 s/100 cc or less. Specifically, the permeability of the separator may be 100 s/100 cc or more and 250 s/100 cc or less, or 150 s/100 cc or more and 200 s/100 cc or less. Preferably, the permeability of the separator may be 100 s/100 cc or more and 150 s/100 cc or less. When the permeability of the separator has the aforementioned range, the output, safety, and cycle characteristics of an electrochemical device can be secured.

The positive electrode and the negative electrode may be a positive electrode and a negative electrode that each are formed by applying and drying an electrode active material on both surfaces of each current collector. A material having conductivity while not causing a chemical change in an electrochemical device may be used as the current collector. For example, the current collector for the positive electrode may be aluminum, nickel, titanium, calcined carbon, stainless steel; aluminum or stainless steel being surface-treated with carbon, nickel, titanium, silver, etc., but the present disclosure is not limited thereto. For example, the current collector for the negative electrode may be copper, nickel, titanium, calcined carbon, stainless steel; copper or stainless steel being surface-treated with carbon, nickel, titanium, silver, etc., but the present disclosure is not limited thereto. The current collector may have various forms, such as a metal thin plate, a film, foil, a net, a porous material, and foam.

The positive electrode includes a positive electrode current collector, and a positive electrode active material layer including a positive electrode active material, a conductive material, and positive electrode binder resin on both surfaces of the current collector. The positive electrode active material may include one of a layered compound, such as lithium manganese composite oxide (LiMn₂O₄, LiMnO₂, etc.), lithium cobalt oxide (LiCoO₂), or lithium nickel oxide (LiNiO₂), or a compound substituted with one or more types of transition metal; lithium manganese oxide, such as Chemical Formula Li₁₊ₓMn₂₋ₓO₄ (wherein x is 0 to 0.33), LiMnO₃, LiMn₂O₃, LiMnO₂, etc.; lithium copper oxide (Li₂CuO₂); vanadium oxide, such as LiV₃O₃, LiV₃O₄, V₂O₅, and Cu₂V₂O₇; Ni site-type lithium nickel oxide that is represented as Chemical Formula LiNi₁₋ₓMₓO₂ (wherein M = Co, Mn, Al, Cu, Fe, Mg, B, or Ga and x = 0.01 to 0.3); lithium manganese composite oxide that is represented as Chemical Formula LiMn₁₋ₓMₓO₂ (wherein M = Co, Ni, Fe, Cr, Zn, or Ta and x = 0.01 to 0.1) or Li₂Mn₃MO₈ (wherein M = Fe, Co, Ni, Cu, or Zn); LiMn₂O₄ in which some of Li in Chemical Formula has been substituted with alkaline earth metal ions; a disulfide compound; and Fe₂(MoO₄)₃ or a mixture of two or more of them. Preferably, the positive electrode active material may include one or more types of transition metal.

Binder resin that is commonly used in an electrode of an electrochemical device is used as the positive electrode binder resin, but the positive electrode binder resin may include a fluorine-based polymer. Specifically, the positive electrode binder resin may be a polyvinyl fluoride-based polymer or a mixture including the same. Preferably, the positive electrode binder resin may include the same polymer as second binder particles included in the second porous coating layer. The second porous coating layer and the positive electrode active material layer may include a polymer including the same or identical polymer backbone as a second binder particles and positive electrode binder resin, respectively. The second porous coating layer may show greater bonding strength with a positive electrode than bonding strength with a negative electrode.

The negative electrode includes a negative electrode current collector, and a negative electrode active material layer including a negative electrode active material, a conductive material, and negative electrode binder resin on both surfaces of the current collector. The negative electrode may include one selected from among lithium metal oxide; carbon, such as non-graphite carbon, or graphite-based carbon; LixFe₂O₃ (0≤x≤1); LiₓWO₂ (0≤x≤1); a silicon-based material, such as Si, SiOₓ (0<x<2), SiC, and an Si alloy; metal composite oxide such as SnₓMe₁₋ₓMe'_{y}O_{z} (Me: Mn, Fe, Pb, Ge; Me': Al, B, P, Si, Group 1, Group 2, and Group 3 elements in the periodic table, halogen; 0<x≤1; 1≤y≤3; 1≤z≤8); lithium metal; a lithium alloy; a tin-based alloy; metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; an Li-Co-Ni-based material; and titanium oxide, or a mixture of two or more of them, as the negative electrode active material.

Binder resin that is commonly used in an electrode of an electrochemical device is used as the negative electrode binder resin, but the negative electrode binder resin may include an acrylic polymer. Specifically, the negative electrode binder resin may be an acrylic polymer or a mixture including the same. Preferably, the negative electrode binder resin may include the same polymer as the first binder particles included in the first porous coating layer. The first porous coating layer and the negative electrode active material layer may include a polymer including the same or identical polymer backbone as a first binder particles and negative electrode binder resin, respectively. The first porous coating layer may show higher bonding strength with a negative electrode than bonding strength with a positive electrode.

The conductive material may be any one selected from a group consisting of graphite, carbon black, a carbon fiber, a metal fiber, metal powder, a conductive whisker, conductive metal oxide, a carbon nano tube, activated carbon, and a polyphenylene derivative, or a mixture of two or more conductive materials of them. A graphite sheet of the carbon nano tube has a cylinder shape having a nano size diameter, and the carbon nano tube has an sp² bonding structure and shows the characteristics of a conductor or a semiconductor depending on an angle and structure in which the graphite sheet is rolled. The carbon nano tube may be divided into a single-walled carbon nanotube (SWCNT), a doublewalled carbon nanotube (DWCNT), and a multi-walled carbon nanotube (MWCNT) depending on the bond number that forms a wall. These carbon nano tubes may be properly selected depending on the use of a dispersion solution. More specifically, it may be one selected from a group consisting of natural graphite, synthetic graphite, super-p, acetylene black, ketjen black, channel black, furnace black, lamp black, summer black, denka black, aluminum powder, nickel powder, zine oxide, potassium titanate, and titanium oxide or a mixture of two or more conductive materials of them.

An electrode assembly of this detailed example can reduce an electrode-separator bonding strength deviation on both surfaces of a separator by adjusting an average diameter of binder particles included in the porous coating layer by considering the type of electrode that is bonded to a porous coating layer in the separator and bonding strength thereof. Specifically, the first porous coating layer may have greater bonding strength with a negative electrode than bonding strength with a positive electrode. The second porous coating layer may have greater bonding strength with a positive electrode than bonding strength with a negative electrode. Bonding strength between the first porous coating layer and the negative electrode may be greater than bonding strength between the second porous coating layer and the positive electrode. The bonding strength between the first porous coating layer and the negative electrode may be adjusted to a level similar to that of the bonding strength between the second porous coating layer and the positive electrode, by adjusting the average diameter of the first binder particles to the average diameter or more of the inorganic particles by reducing a contact area between the binder particles and an electrode. The bonding strength between the second porous coating layer and the positive electrode may be adjusted to a level similar to that of the bonding strength between the first porous coating layer and the negative electrode, by increasing a contact area between the binder particles and an electrode by adjusting the average diameter of the second binder particles smaller than the average diameter of the inorganic particles. Accordingly, a deviation between the bonding strength between the first porous coating layer and the negative electrode and the bonding strength between the second porous coating layer and the positive electrode can be reduced.

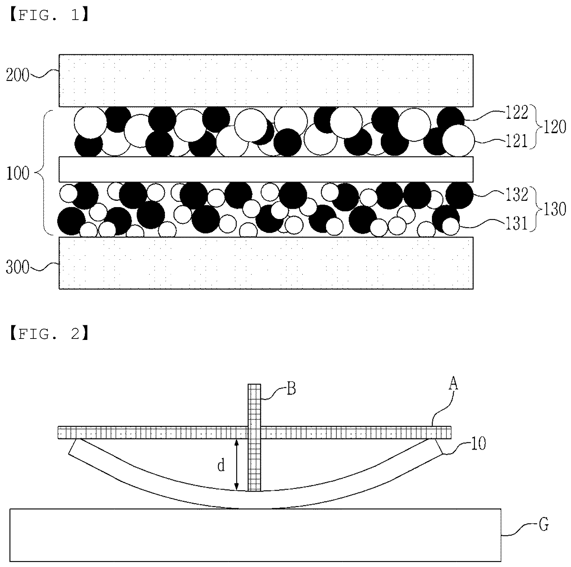

FIG. 1 is a conceptual diagram illustrating a structure in which a separator 100 has been bonded to a negative electrode 200 and a positive electrode 300 that neighbor the separator in an electrode assembly according to the detailed example. The separator 100 may include a first porous coating layer 120 formed on both surfaces of a porous polymer base 110 and a second porous coating layer 130 formed on a side opposite thereto. The first porous coating layer 120 may include first binder particles 121 and inorganic particles 122. The second porous coating layer 130 may include second binder particles 131 and inorganic particles 132. The inorganic particles 122 and 132 included in the respective coating layers may be the same or different from each other, but it will be understood that the first binder particles 121 of the first porous coating layer 120, which have a greater average diameter than the inorganic particles 122, is used and the second binder particles 131 of the second porous coating layer 130, which have a smaller average diameter than the inorganic particles 132, is used. Bonding strength between one first binder particle 121 and the negative electrode 200 is greater than bonding strength between one second binder particle 131 and the positive electrode 300, but the area of the second binder particle 131 that has a smaller size than the inorganic particle 132 and that is exposed to a bonding surface with the positive electrode 300 may be greater than the area of the first binder particles 121. Accordingly, a deviation between bonding strength between the first porous coating layer 120 and the negative electrode 200 and bonding strength between the second porous coating layer 130 and the positive electrode 300 can be reduced.

For example, bonding strength between the first porous coating layer and the negative electrode may be 0.8 to 1.2 times bonding strength between the second porous coating layer and the positive electrode. Specifically, the bonding strength between the first porous coating layer and the negative electrode may be 0.85 to 1.15 times, 0.9 to 1.1 times, or 0.95 to 1.05 times the bonding strength between the second porous coating layer and the positive electrode. Preferably, the two pieces of bonding strength may be the same. Bending does not occur or the level of the bending may be reduced in an electrode assembly in which electrode-separator bonding strength on both surfaces has been adjusted as described above.

The size of such an electrode assembly may be increased because a deviation of the electrode-separator bonding strength on both surfaces of a part of the separator is small, or the bending of the separator does not occur or may be reduced although the thickness of the electrode assembly is increased because a plurality of electrodes is stacked.

For example, the electrode assembly may have a rectangular shape having a long side and a short side on a plane view. Specifically, the length of the long side of the electrode assembly may be 500 mm or more and 600 mm or less, and the length of the short side of the electrode assembly may be 80 mm or more and 150 mm or less. When the length of the long side of the electrode assembly has the aforementioned range, tension applied to the separator may be increased because the size of the electrode assembly is increased. However, the electrode assembly according to this detailed example can be received and used in an electric vehicle due to excellent safety because bending does not occur or a bending level can be reduced.

For example, the electrode assembly may have a total thickness of 8 mm or more and 20 mm or less including a plurality of electrodes. When the thickness of the electrode assembly has the aforementioned range, bending may occur as an accumulated value of a bonding strength deviation that is applied to the separator, but the electrode assembly according to this detailed example can be received and used in an electric vehicle due to excellent safety because bending does not occur or a bending level can be reduced.

Another detailed example of the present disclosure provides an electrochemical device including the electrode assembly according to the aforementioned one detailed example. The electrochemical device may be manufactured by inserting one or more electrode assemblies into a case or a pouch and sealing the case or pouch. The electrode assembly may be impregnated with an electrolyte by injecting the electrolyte before the case or the pouch is sealed. A shape of the case or the pouch is not limited. For example, the electrochemical device may be a cylindrical, prismatic, coin type, or pouch type lithium secondary battery.

According to an embodiment of the present disclosure, the electrolyte is a salt having a structure such as that of A⁺B⁻, which is obtained by dissolving or dissociating a salt in which A⁺ includes ions composed of alkali metallic cations, such as Li⁺, Na⁺, or K⁺, or a combination of them and B⁻ includes ions composed of anions, such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, or C(CF₂SO₂)₃⁻, or a combination of them, in an organic solvent consisting of propylene carbonate (PC), ethylene carbonate (EC), diethyl carbonate (DEC), dimethyl carbonate (DMC), dipropylcarbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), or gamma butyrolactone (γ-butyrolactone) or a mixture of them, but the present disclosure is not limited thereto only.

An electrochemical device including the electrode assembly may be a lithium secondary battery. The battery may be used as a unit cell, and may be used as a battery module including a unit cell, a battery pack including a battery module, and an apparatus including a battery pack as a power source. The apparatus may include small-sized apparatuses, such as a computer, a mobile phone, and a power tool, and electric vehicles including an electric vehicle (EV), a hybrid electric vehicle (HEV), and a plug-in hybrid electric vehicle (PHEV) which are moved by electric power from an electric motor; electric two-wheel vehicles including an electric bicycle (E-bike) and an electric scooter (E-scooter); an electric golf cart; and a middle and large-sized apparatus such as a system for power storage, but the present disclosure is not limited thereto.

Still another detailed example of the present disclosure is a method of manufacturing an electrode assembly, and provides a method including (S10) forming a stack body by alternately disposing a positive electrode and a negative electrode between separators while folding the separator in zigzags, and (S20) manufacturing an electrode assembly by applying heat and pressure to the stack body. The same contents as the aforementioned contents of the electrode assembly, among descriptions relating to the method of manufacturing an electrode assembly, are replaced with the description of the previous detailed example.

Step S10 is a step of forming the stack body by alternately disposing the positive electrode and the negative electrode between bent parts that are formed while folding the separator in zigzags. The length of the separator in a length direction (or a machine direction (MD)) thereof may be longer than the length of the separator in a width direction (or a transverse direction (TD)) thereof. The separator may be folded in zigzags at predetermined intervals in the MD direction. The arrangement of the positive electrode and the negative electrode may be determined by considering the type of binder particles included in a porous coating layer of the separator. The negative electrode may be disposed between first porous coating layers having greater bonding strength with the negative electrode. The positive electrode may be disposed between second porous coating layers. The negative electrode is used one more than the positive electrode, and all of two electrodes disposed on the outermost side in the electrode assembly may be negative electrodes.

The separator, the positive electrode, and the negative electrode may each have a rectangular shape, but the present disclosure is not limited thereto. For example, the separator, the positive electrode, and the negative electrode may each have a rectangular shape in which the length of the MD direction is greater than the length of the TD direction. The positive electrode and the negative electrode may each be disposed in a plural number in the MD direction of the separator. The MD direction of the separator and the TD direction of the positive electrode and the negative electrode may be disposed to be parallel to each other. Preferably, the positive electrode and the negative electrode may be arranged so that the center lines thereof in the TD direction are identical with each other.

Step S20 is a step of manufacturing the electrode assembly in which the positive electrode and the separator and the negative electrode and the separator have been bonded by thermally compressing the stack body formed in Step S10. Through the thermal compression, the first porous coating layer of the separator and the active material layer of the negative electrode may be bonded, and the second porous coating layer and the active material layer of the positive electrode may be bonded. The thermal compression may include compressing the top and bottom of the stack body by using a press apparatus, and may include applying pressure of 1 to 7 MPa to one or more stack bodies for 1 to 30 seconds at a temperature of 45 to 80°C. By adjusting temperature and pressure conditions for the thermal compression in the aforementioned range, the uniform bonding of the separator and the electrodes that constitute the stack body may be implemented without causing damage to the stack body. The press apparatus is not limited to the type of press apparatus if the press apparatus can bond the separator and the electrodes by applying heat and pressure to one surface or both surfaces of the stack body simultaneously or at different times while maintaining the arrangement of the separator and the electrodes included in the stack body.

Preferably, the thermal compression may be divided into two or more steps. Step S20 may include first thermal compression for fixing relative locations of the electrodes with respect to the separator by applying pressure of 1 to 6 MPa for 1 to 30 seconds at 45 to 65°C and second thermal compression for fully bonding the separator and the electrodes by applying pressure of 1 to 7 MPa for 1 to 30 seconds at 50 to 80°C. The first thermal compression may include fixing the locations of the electrodes by partially bonding the separator and neighbor electrodes. The second thermal compression may include manufacturing the electrode assembly by fully bonding the separator and the electrodes at locations that are determined through the first thermal compression. Through the first thermal compression and the second thermal compression, the electrode assembly that has excellent arrangement and in which the bonding of the electrode-separator has been uniformly formed compared to a single step thermal compression may be manufactured. Through the first thermal compression and the second thermal compression, excellent production efficiency can be achieved because damage to the separator is prevented by reducing thermal compression conditions compared to the single step thermal compression.

Hereinafter, the present disclosure is descried more specifically through detailed Embodiments and Experiment Examples. The Embodiments and Experiment Examples below are for exemplifying the present disclosure, and the present disclosure is not restricted by the Embodiments and Experiment Examples below.

### Embodiment 1

First coating slurry was prepared by mixing alumina having the average diameter D50 of 500 nm and SBR (a weight-average molecular weight: 300,000) having the average diameter D50 of 700 nm with water at a weight ratio of 80:20 at room temperature and dispersing them. Second coating slurry was prepared by mixing alumina having the average diameter D50 of 500 nm and PVdF-HFP (a weight-average molecular weight: 400,000) having the average diameter D50 of 300 nm with water at a weight ratio of 80:20 at room temperature and dispersing them.

A separator (a thickness 15 *µ*m) in which a first porous coating layer (a thickness of 3 *µ*m) and a second porous coating layer (a thickness of 3 *µ*m) were formed by simultaneously coating the first coating slurry and the second coating slurry on each surface of a polyethylene base having a thickness 9 *µ*m by using a slot die and drying them was manufactured.

30 positive electrodes (positive electrode binder resin: PVdF-HFP) each having a 90 mm × 315 mm size and a thickness of 125 *µ*m and 31 negative electrodes (negative electrode binder resin: SBR) each having a 95.5 mm × 320 mm size and a thickness of 150 *µ*m were prepared while folding the separator at intervals of 98.5 mm in zigzags. A stack body was prepared by disposing the negative electrode between the first porous coating layers and disposing the positive electrode between the second porous coating layers while folding the separator at intervals of 98.5 mm in zigzags. An electrode assembly (a thickness: 9.3 mm) having a shape, such as that in FIG. 2, was manufactured by holding the stack body in a press apparatus, thermally compressing the stack body at pressure of 6 MPa for 1 second at 60°C, and then thermally compressing the stack body at pressure of 6 MPa for 1 second at 70°C.

The assembly of a secondary battery was completed by inputting the electrode assembly into a case by using a pouch exterior material of a laminate sheet of CPP/aluminum/nylon, injecting an ethyl methyl carbonate (EMC) electrolyte including LiPF₆, and thermally fusing the pouch-exterior material.

Thereafter, a heating press process prior to activation and an activation process were performed on the secondary battery. The heating press process was performed under temperature and pressure conditions of 30°C and 3.0 kgf/cm² for 5 minutes. The activation process was performed by charging the secondary battery to 0.5 C under temperature and pressure conditions of 50°C and 1.0 kgf/cm².

### Embodiment 2

An electrode assembly and a secondary battery were manufactured by using the same method as that of Embodiment 1, except that alumina having the average diameter D50 of 300 nm and SBR (a weight-average molecular weight: 300,000) having the average diameter D50 of 500 nm were used in the first coating slurry at a weight ratio of 80:20.

### Comparative Example 1

An electrode assembly and a secondary battery were manufactured by using the same method as that of Embodiment 1, except that alumina having the average diameter D50 of 500 nm and SBR (a weight-average molecular weight: 300,000) having the average diameter D50 of 300 nm were used in the first coating slurry at a weight ratio of 80:20.

### Comparative Example 2

An electrode assembly and a secondary battery were manufactured by using the same method as that of Embodiment 1, except that a first porous coating layer manufactured as the first coating slurry by using alumina having the average diameter D50 of 500 nm and PVdF-HFP (a weight-average molecular weight: 400,000) having the average diameter D50 of 700 nm in the first coating slurry at a weight ratio of 80:20 was bonded to a negative electrode.

### Comparative Example 3

An electrode assembly and a secondary battery were manufactured by using the same method as that of Embodiment 1, except that alumina having the average diameter D50 of 500 nm and SBR (a weight-average molecular weight: 300,000) having the average diameter D50 of 300 nm were used in the second coating slurry at a weight ratio of 80:20.

### Embodiment 3

An electrode assembly and a secondary battery were manufactured by using the same method as that of Embodiment 1, except that electrodes in which the long side of a negative electrode was 525 mm and the long side of a positive electrode was 520 mm were used.

### Comparative Example 4

An electrode assembly and a secondary battery were manufactured by using the same method as that of Comparative Example 2, except that electrodes in which the long side of a negative electrode was 525 mm and the long side of a positive electrode was 520 mm were used.

### Comparative Example 5

An electrode assembly (a thickness: 13.6 mm) and a secondary battery were manufactured by using the same method as that of Comparative Example 2 except that 44 positive electrodes and 45 negative electrodes were used.

### Experiment Example

### Measuring of permeability

The permeability of the manufactured separator was checked in the process of preparing the electrode assemblies of the Embodiments and the Comparative Examples.

The permeability was measured based on the time that was taken for the air of 100 cc to pass through a separator having a diameter of 28.6 mm and an area of 645 mm² by using the Gurley densometer (Gurley Corporation, 4110N) .

### Check bonding strength of electrode-separator

In the electrode assemblies manufactured in the Embodiments and the Comparative Examples, electrode-separator bonding strength was checked.

In a bonding surface of a negative electrode and the first porous coating layer of a separator and a bonding surface of a positive electrode and a second porous coating layer of the separator in each electrode assembly, bonding strength was measured when the electrode was peeled off from the separator while peeling off the electrode layer by layer at a speed of 200 mm/min at 90°, and was arranged in Tables 1 and 2 below.

### Check bending of secondary battery

A method of evaluating the bending level of a secondary battery is described with reference to FIG. 2. A secondary battery 10 including the electrode assembly of each of the Embodiments and the Comparative Examples on which an activation process was completed may have a shape in which one surface of the secondary battery is concavely bent. As in FIG. 2, the secondary battery 10 was disposed on a flat surface G so that the concaved surface of the secondary battery 10 was directed toward an upper side. A first ruler A was disposed at both ends of the concaved surface, and a second ruler B was disposed in a direction perpendicular to the first ruler A. The longest distance (d, mm) between the secondary battery 10 and the first ruler A was evaluated as the bending level and indicated in Table below. The bending level of the secondary battery may be evaluated as being excellent when the bending level is less than 5 mm.

**[Table 1]**

| | | Embodim ent 1 | Embodim ent 2 | Comparat ive example 1 | Comparat ive example 2 | Comparat ive example 3 |
|---|---|---|---|---|---|---|
| First porou s coati ng layer | inorgan ic particl e (D50) | Alumina (500 nm) | Alumina (300 nm) | Alumina (500 nm) | Alumina (500 nm) | alumina (500 nm) |
| | binder particl e (D50) | SBR (700 nm) | SBR (500 nm) | SBR (300 nm) | PVdF-HFP (700 nm) | SBR (700 nm) |
| Secon d porou s coati ng layer | inorgan ic particl e (D50) | Alumina (500 nm) | Alumina (500 nm) | Alumina (500 nm) | Alumina (500 nm) | alumina (500 nm) |
| | binder particl e (D50) | PVdF-HFP (300 nm) | PVdF-HFP (300 nm) | PVdF-HFP (300 nm) | PVdF-HFP (300 nm) | SBR (300 nm) |
| Separator permeability (s/100 cc) | | 120 | 125 | 120 | 120 | 120 |
| First porous coating layer-negative electrode bonding strength (gf/25 mm) | | 35 | 35 | 10 | 15 | 35 |
| Second porous coating layer-positive electrode bonding strength (gf/25 mm) | | 35 | 35 | 35 | 35 | 10 |
| Bending level (mm) | | 1.5 | 1.0 | 7.0 | 8.0 | 8.0 |

**[Table 2]**

| | | Embodiment 3 | Comparative Example 4 | Comparative Example 5 |
|---|---|---|---|---|
| First porous coating layer | Inorganic particles (D50) | Alumina (500 nm) | Alumina (500 nm) | Alumina (500 nm) |
| | Binder particles (D50) | SBR (700 nm) | PVdF-HFP (700 nm) | PVdF-HFP (700 nm) |
| Second porous coating layer | Inorganic Particles (D50) | Alumina (500 nm) | Alumina (500 nm) | alumina (500 nm) |
| | Binder particles (D50) | PVdF-HFP (300 nm) | PVdF-HFP (300 nm) | PVdF-HFP (300 nm) |
| Total thickness (mm) of electrode assembly | | 9.5 | 9.5 | 13.6 |
| Length (mm) of long side of electrode assembly | | 526 | 526 | 321 |
| First porous coating layer-negative electrode bonding strength (gf/25 mm) | | 35 | 15 | 15 |
| Second porous coating layer-positive electrode bonding strength (gf/25 mm) | | 35 | 35 | 35 |
| Bending level | | 1.7 | 8.5 | 9.0 |

**[Description of reference numerals]**

| | | | |
|---|---|---|---|
| 100: | separator | 110: | porous polymer base |
| 120: | first porous coating layer | 121: | first binder particles |
| 122: | inorganic particle | 130: | second porous coating layer |
| 131: | second binder particle | 132: | inorganic |
| | | | particle |
| 200: | negative electrode | 300: | positive electrode |
| 10: | secondary battery | | |
| A: | first ruler | B: | second ruler |

## Claims

1. An electrode assembly comprising:
a separator comprising a porous polymer base, a first porous coating layer formed on one surface of the porous polymer base, and a second porous coating layer formed on the other surface of the porous polymer base, the separator being bent in a zigzag shape;
a negative electrode disposed between the first porous coating layers; and
a positive electrode disposed between the second porous coating layers,
wherein the first porous coating layer has greater bonding strength with the negative electrode than bonding strength with the positive electrode.

2. The electrode assembly of claim 1, wherein the second porous coating layer has greater bonding strength with the positive electrode than bonding strength with the negative electrode.

3. The electrode assembly of claim 1, wherein the bonding strength between the first porous coating layer and the negative electrode is 0.8 to 1.2 times bonding strength between the second porous coating layer and the positive electrode.

4. The electrode assembly of claim 1, wherein
the first porous coating layer comprises first binder particles and inorganic particles, and
an average diameter of the first binder particles is greater than or equal to an average diameter of the inorganic particles.

5. The electrode assembly of claim 4, wherein the first porous coating layer comprises the first binder particles and the inorganic particles at a weight ratio of 20:80 to 80:20.

6. The electrode assembly of claim 1, wherein
the second porous coating layer comprises second binder particles and inorganic particles, and
an average diameter of the inorganic particles is greater than an average diameter of the second binder particles.

7. The electrode assembly of claim 1, wherein
the positive electrode comprises a positive electrode active material and positive electrode binder resin, and
the second binder particles and the positive electrode binder resin are fluorine-based polymers.

8. The electrode assembly of claim 1, wherein a thickness of the first porous coating layer is greater than or equal to a thickness of the second porous coating layer.

9. The electrode assembly of claim 1, wherein a length of a long side of the electrode assembly is 500 to 600 mm.

10. The electrode assembly of claim 1, wherein a thickness of the electrode assembly is 8 to 20 mm.
